# EUROPEAN PATENT SPECIFICATION

(11) **EP 2 702 916 B1**
(45) Date of publication and mention of the grant of the patent: **27.02.2019**
(21) Application number: 13182056.5
(22) Date of filing: 28.08.2013
(51) Int. Cl.: A47L 9/16, A47L 9/00, A47L 9/10, B01D 45/16

(54) **Cyclonic separator**
Zyklonabscheider
Séparateur cyclonique

(30) Priority: 30.08.2012 GB 201215396
(43) Date of publication of application: 05.03.2014
(73) Proprietor: HOOVER LIMITED, Merthyr Tydfil, South Wales CF48 4TU (GB)
(72) Inventor: Bassett, Alexander, 215006 Suzhou (CN)
(74) Representative: Evans, Huw David Duncan

(56) References cited:
- GB-A- 2 445 050
- GB-A- 2 481 608
- US-A- 3 541 764
- US-A1- 2003 159 412

## Description

This invention relates to a cyclone separator and to a vacuum cleaner incorporating the same.

Vacuum cleaners all incorporate some form of dust separation apparatus to separate dirt and dust from an induced airflow. Historically, vacuum cleaners were provided with porous filter bags which filter and collect the dust. Once full the dust bag can be discarded and replaced.

Nowadays it has become fashionable to provide vacuum cleaners with cyclonic separators which can simply be emptied without the need to purchase dust bags. Cyclonic separators also avoid the problem that dust bags can become clogged with dust if they are not changed regularly. A disadvantage of such cyclonic vacuum cleaners is that the dirt and dust collected at the bottom of the cyclone chamber can become re-entrained into the airflow if too much separated dirt and dust accumulates at the bottom of the chamber. Accordingly such cleaners have a limited capacity for separated dirt and dust and need to be emptied regularly. Furthermore, these collected dirt and dust at the bottom of the cyclone chamber tends to expand when there is any airflow through the separator, thereby limiting the capacity of the dirt and dust which can be retained.

Another disadvantage of known cyclonic vacuum cleaners is that the separated dirt and dust is simply emptied by removing the collection chamber from the cleaner and opening a flap or turning the chamber upside-down. The dirt and dust then falls under gravity into a refuse receptacle. This process is both messy and unhygienic.

Various solutions to the above mentioned problems have been proposed.

JP2010119623 discloses a vacuum cleaner having a cyclone separation apparatus which comprises a cylindrical cyclone chamber having a tubular side wall. A region is provided at the lower end of the chamber for collecting matter separated from the airflow by the cyclone separator. An auger is mounted in the collection region of the chamber, the auger having a vane which drives the separated dust downwardly into the collection region and serves to compact the collected dust.

Our co-pending European Patent Application No. 12150884.0 discloses a vacuum cleaner having a cyclonic separator having a separation chamber provided with a tubular side wall, an inlet disposed at a first end of the chamber for the fluid to be treated, a region disposed at the second end of the chamber for collecting matter separated from the fluid, an auger mounted within the chamber for rotation about the longitudinal axis thereof, the auger having a vane which extends both radially of the chamber and longitudinally of the chamber towards the second end thereof in a first helical direction; and a motor for rotating the auger about the longitudinal axis of the chamber in a direction opposite to said helical direction.

In use, the auger is rotated and the dust-laden air entering the cylindrical cyclone chamber flows helically within the chamber between adjacent turns of the helically-extending vane. The direction of rotation of the auger is opposite to the helical direction and thus the separated matter is driven by the auger towards the collection region and compacted. In this manner, the capacity of the separator for separated matter is substantially increased and the separator has to be emptied less frequently and the risk of re-entrainment of the separated matter is reduced.

A further separation device is mounted downstream of the cyclone separation device for removing any finer dirt and dust particles. Any dirt and dust particles separated by the downstream cyclone separation device fall down a tubular shaft of the auger to the collection region. In use, the tubular shaft of the auger is normally closed at its upper end by a valve, which prevents any airflow along the shaft of the auger from the chamber of the upstream cyclone: any such airflow could cause the separated dust to be carried from the collection region towards the outlet of the cleaner.

Following use, the valve can be opened to allow the dirt and dust particles separated by the downstream cyclone separation device to fall down a tubular shaft of the auger to the collection region. A disadvantage of such an arrangement is that it limits the amount of dirt and dust that can be separated, since the cleaner has to be stopped periodically to open the valve.

US2003159412A1 discloses a cyclone separation apparatus for separating matter from a flow of fluid, the apparatus comprising a first device for separating dirt and dust from the fluid flow, a second device mounted downstream of the first device for separating dirt and dust from the fluid flow from the first device, a collection chamber for collecting dirt and dust separated by the first and second separation devices, a passageway extending from an outlet of the second device to said collection chamber for conveying dirt and dust separated by the second device to said collection chamber, and a first valve member for closing the passageway during use of the apparatus and arranged to retain dirt and dust separated by the second device.

We have now devised an improved cyclone separation apparatus.

In accordance with the present invention, there is provided a cyclone separation apparatus of the type disclosed in US2003159412A1, which is characterised in that an actuator is provided for opening the first valve member, and a second valve member is arranged between the outlet and the first valve member for closing the passageway when said first valve member is opened by said actuator.

In use, the first valve member is normally closed to prevent the flow of fluid along the passageway and thereby alleviate the risk of separated dirt and dust being carried in the reverse direction along the passageway from the collection chamber towards an outlet of the apparatus. Any dirt and dust separated by the downstream separation device is retained by the first valve member. As the amount of retained dirt and dust builds up during use, the first valve member can be opened by the actuator to allow the dirt and dust to enter the collection chamber. The second valve member closes as the first valve member is opened to continue to prevent the flow of fluid along the passageway.

In this manner, the need to periodically stop the cleaner to release the dirt and dust separated by the second separation device into the collection chamber is avoided.

Preferably the actuator is arranged to close the second valve member when the first valve member is opened.

Preferably the passageway comprises an elongate tubular duct.

Preferably the duct has a distal end which communicates with said collection chamber and a proximal end which communicates with the outlet of said second separation device.
Preferably the first valve is disposed in the duct at a point remote from the proximal end thereof. In this manner, the duct serves as a temporary collection chamber in which the dirt and dust separated by the second separation device is temporarily retained whilst the first valve member is closed.

Preferably the second valve member seals against the proximal end of the duct when closed.

Preferably the actuator extends along the duct to the first valve member and comprises respective portions for actuating the first and second valve members.

Preferably the second valve member comprises a formation on the actuator which closes the duct.

Preferably the actuator comprises a device which is arranged to displace a portion of the actuator to operate the valves.

Preferably the actuator comprises a portion which extends along the duct from the proximal end thereof, the actuator device being disposed adjacent the second separator device.

Preferably the first valve member is biased into its normally closed position.

Preferably the first valve member comprises a flap which is pivoted across the duct and which is pivoted towards the distal end of the duct to open the valve.

Preferably an auger is provided in the collection chamber for compacting the dirt and dust separated by the first and second separation devices.

Preferably the duct extends along a shaft of the auger.

Preferably the first separation device comprises a cyclone separator, the duct extending along the central axis of the separator.

Preferably the auger comprises a vane which increases in diameter towards the distal end of the collection chamber, such that the vane preferably contacts a tubular sidewall of the collection chamber.

Preferably the actuator is arranged to periodically open the first valve member and close the second valve member during use of the apparatus.

Preferably the first separation device comprises a cyclone separator.

Preferably the second separation device comprises a plurality of cyclone separators or a filter.

Also in accordance with the present invention, there is provided a vacuum cleaner comprising a cyclone separation apparatus as hereinbefore defined.

Embodiments of the present invention will now be described by way of examples only and with reference to the accompanying drawings, in which:
Figure 1 is a longitudinal sectional view of a dust separation unit of an embodiment of vacuum cleaner in accordance with the present invention; and
Figure 2 is a longitudinal sectional view of a dust separation unit of an alternative embodiment of vacuum cleaner in accordance with the present invention.

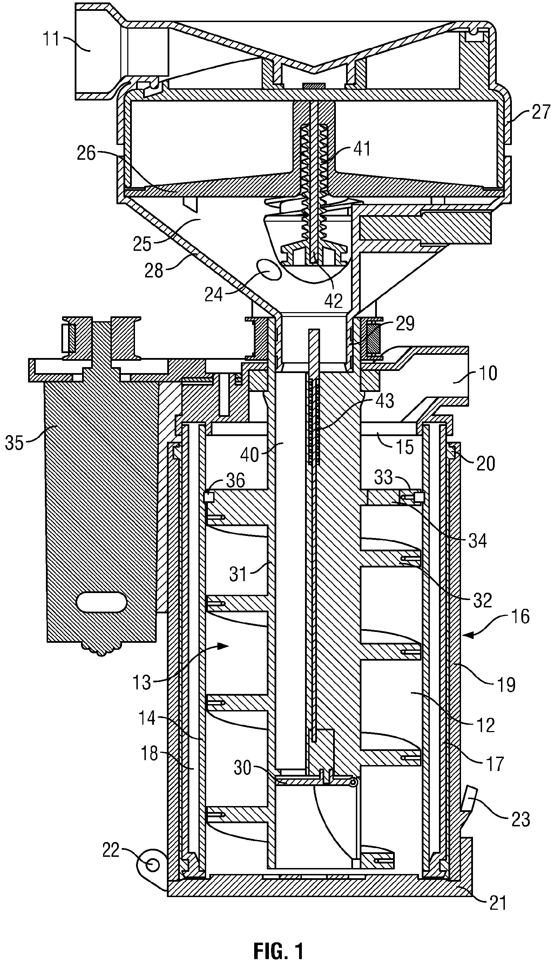

Referring to Figure 1 of the drawings, there is shown a dust separation unit of a vacuum cleaner having a dirty air inlet port 10 and an outlet port 11 for cleaned air. The inlet port 10 extends through the upper end wall 15 of a first separator device in the form of a cyclone separator 16, which is mounted at the lower end of the unit. The cyclone separator 16 comprises a cylindrical cyclone chamber 12 having a tubular side wall 14 in the form of a filter, which is provided with a plurality of apertures or openings (not shown) that allow air to pass therethrough but which serve to block the passage of particles having a size greater than a pre-determined limit, e.g. 0.4mm. The side wall 14 is preferably formed of a metal, such as stainless steel in which apertures or openings of the required size are formed, e.g. using laser cutting or chemical etching.

The tubular side wall or filter 14 is disposed inside a tubular body 17 mounted coaxially therewith and separated therefrom by an annular space 18. The cyclone separator 16 further comprises a tubular outer wall 19 which is a tight but sliding fit around the tubular body 17. The upper end of the tubular outer wall 19 is provided with an inwardly directed seal 20, which lightly seals against the exterior surface of the tubular body 17. The lower end of the tubular outer wall 19 is provided with a flap or closure 21, which serves to form a bottom end wall of the cyclone chamber 12. The flap 21 is connected to the tubular outer wall 19 by a hinge 22. A catch 23 is provided for retaining the flap 21 in its closed position.

The upper end of the annular space 18 is connected via a plurality of parallel ducts 24 to a second separation device in the form of a circular-section filter 26 disposed axially above the cyclone separator 16 inside a chamber 25. The outlet port 11 of the device extends from a region of the chamber 25 disposed above the filter 26. The filter chamber 25 comprises a filter housing 27, which can be opened to gain access to the filter 26 therein.

The housing 27 comprises a frusto-conical bottom wall 28 which tapers inwardly and downwardly towards an axially-disposed outlet 29.

An auger 13 is mounted inside the cyclone chamber 12 for rotation about the central longitudinal axis thereof. The auger 13 comprises a central axially-extending tubular shaft 31 and a vane 32 which extends helically around the exterior of the shaft 31 in a clockwise direction from the upper to the lower end thereof. In the example shown, the vane 31 has approximately four turns but it will be appreciated that more or fewer turns could be provided. The vane 32 extends radially outwardly from the shaft 31 to contact the interior surface of the tubular filter 14 of the side wall of the cyclone chamber 12. An annular collar 33 extends around the upper end of the shaft 31 and comprises a radially outer edge in contact with the tubular filter 14. The upper end of the vane 32 is connected to the underside of the collar 33. An aperture 34 is formed in the collar 33. A motor 35 is arranged to rotate the shaft 31 of the auger 13 about the central longitudinal axis of the cyclone chamber 12. The tubular shaft 31 of the auger 13 defines an elongate duct 40 having a proximal end connected to the outlet 29 and a distal end which terminates at the bottom of the chamber 12.

The radially outer edge of the vane 32 is provided with a sealing member 36 in the form of a sprung steel strip, which is biased against the internal surface of the tubular filter 14 by an elastomeric member disposed at the base of a channel in which the member 36 is mounted.

A first valve member in the form of a flap 30 is normally closed to prevent the passage of air along the duct 40 of the auger 13 towards the filter 26. The flap 30 is biased into its normally-closed position across the duct 40. A plunger comprising a shaft 41 and a head 42 is arranged inside the filter chamber 25 over the outlet 29. The shaft 41 is provided with a row of axially-extending teeth which engage with a toothed wheel (not shown) of a motor (not shown). The motor can be energised to move the plunger axially of the duct to bring the head 42 of the plunger into sealing contact with the outlet 29. In this position the underside of the plunger abuts an elongate actuator member 43 which extends along the duct 40 towards the flap 30, thereby causing the flap 30 to open as the plunger head 42 simultaneously closes the outlet 29. Likewise, the flap 30 closes under the applied bias as the plunger head 42 is moved upwardly to open the outlet 29.

In use, air is drawn into the inlet 10 of the unit by a motor/fan unit (not shown) mounted downstream of the outlet 11 of the unit. The inlet 10 is connected to a floor-engaging head of the vacuum cleaner, so that dust-laden air enters the cyclone chamber 12 via the inlet port 10. The motor 35 is actuated in order to rotate the auger 13 in the counter-clockwise direction (i.e. opposite to the direction in which the vane 32 is wound). Air entering the cyclone chamber 12 then passes through the aperture 34 in the collar 33 of the auger 13. The air then swirls between the adjacent turns of the vane 32 and it will be appreciated that particles contained in the airflow will be forced radially outwards against the tubular filter 14 in line with established cyclonic separation principles. Any dust or matter accumulated on the internal surface of the tubular filter 14 will be scoured and driven downwards by the edge 36 of the vane 32. As the air swirls around the rotating auger 13, it is constantly being drawn radially outwardly through the tubular filter 14 and into the space 18 inside the tubular body 17.

The cleaned air then travels upwardly in the space 18 and through the ducts 24 into the filter chamber 25. The air then passes through the filter 26 and out through the outlet 11. Any fine dust particles in the airflow leaving the cyclone chamber 12 are thus caught on the underside of the filter 26. In an alternative embodiment, one or more further separation devices may be provided downstream of the cyclone separator 16 in addition to or instead of the filter 26.

During use, the auger 13 is constantly driven to drive any dirt and dust collected within the cyclone chamber 12 towards the lower end thereof. As the volume of the separated matter increases, the auger 13 acts to force it against the flap 21 at the bottom end of the cyclone chamber 12. The tubular outer wall 19 then moves downwardly as the force applied to the flap 21 increases. In this manner the volume available at the bottom of the cyclone chamber 12 for holding the separated matter increases. The reduced pressure inside the cyclone chamber 12 has a tendency to pull the flap 21 upwardly towards the auger 13, thereby maintaining the compactness of the unit and assisting compaction of the separated dirt and dust.

Any dirt or dust separated by the filter 26 falls onto the frusto-conical wall 28 of the filter chamber 25 and through the outlet 29 into the duct 40, where it is retained by the flap 30. The separated dirt and dust accumulates inside the duct 40. The motor is periodically driven to open the flap 30 and to allow the dirt and dust which has accumulated to fall towards the bottom of the cyclone chamber 12. In this manner, dust collected on the filter 26 is collected along with the dust separated by the cyclone separator 16. The dirt and dust can then be emptied by opening the flap 21. When the valve flap 30 is opened, the head 42 of the plunger closes the outlet 29 to prevent air from being drawn out of the cyclone chamber 12 and up the duct 40 to the outlet 11. When the outlet 29 is closed, any dirt and dust separated by the filter 26 falls onto the frusto-conical wall 28 and is retained inside the filter chamber 25 until the outlet 29 is opened, whereupon it falls into the duct 40 and is retained by the flap 30. The motor or another device may be arranged to agitate the filter 26 to assist with dislodging any trapped dirt or dust thereon.

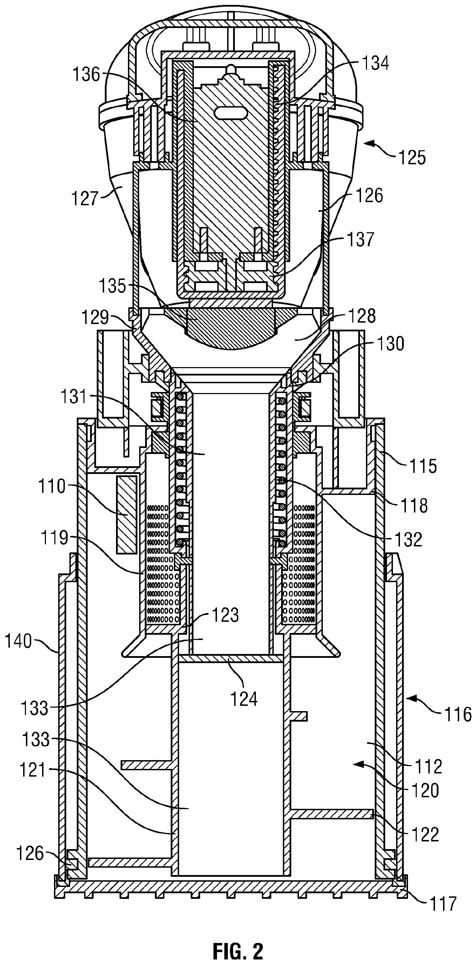

Referring to Figure 2 of the drawings, there is shown a dust separation unit of an alternative embodiment of vacuum cleaner in accordance with the present invention. The separation unit comprises a dirty air inlet port 110 and an outlet port (not shown) at its upper end for cleaned air. The inlet port 110 extends through the upper end of a tubular side wall 115 of a first separator device in the form of a cyclone separator 116, which is mounted at the lower end of the unit. The cyclone separator 116 comprises a cylindrical cyclone chamber 112.

The upper end of the chamber 112 is closed by a top wall 118 having a central aperture. A perforated tubular shroud 119 extends around the aperture and depends from the top wall 118 into the cyclone chamber 112.

An auger 120 is mounted below the shroud 119 at the lower end of the chamber 112 for rotation about the central longitudinal axis thereof. The auger 120 comprises a central axially-extending tubular shaft 121 and a vane 122 which extends helically around the exterior of the shaft 121 in a clockwise direction. In the example shown, the vane 122 has approximately one and a half turns but it will be appreciated that more or fewer turns could be provided. The radial extent of the vane 122 increases towards its lower end, such that the last half turn contacts the interior surface of the tubular side wall 115 of the cyclone chamber 112. The tubular shaft 121 of the auger 120 extends upwardly through the shroud 119 and a flange 123 thereon acts to close the lower end of the shroud 119.

The interior of the shroud 119 is fluidly connected via a duct (not shown) to the upper end a second separation device in the form of a cyclonic separator device 125 comprising an array of high efficiency cyclones e.g. 126,127 which are fluidly connected in parallel. The high efficiency cyclones e.g. 126,127 each comprise a frusto-conical wall having an open lower end through which separated dirt and dust is discharged into a housing 128 having a frusto-conical bottom wall 129 which tapers inwardly and downwardly towards an axially-disposed outlet 130. An axially displaceable tube 131 having an outwardly-tapered upper end extends downwardly from the outlet 130 and along the axis of the shroud 119 into the upper end of the tubular shaft 121 of the auger 120. A spring 132 biases the tube 131 upwardly into a position in which the outwardly tapered upper end thereof is positioned inside the outlet 130

The lower of the tube 131 extends as a close but sliding fit internally of the upper end of the tubular shaft 121 of the auger 120. The tubular shaft 121 of the auger 120 and the axially co-extending tube 131 define an elongate duct 133 having a proximal end connected to the outlet 130 and a distal end which terminates at the bottom of the chamber 112. A first valve member in the form of a flap 124 is arranged at the upper end of the shaft 121 of the auger 120 to prevent the passage of air along the duct 133 towards high efficiency cyclones e.g. 126,127. The flap 124 is biased into its normally-closed position across the shaft 121. The lower end of the tube 131 abuts the top surface of the flap 124 when the latter is closed.

A motor (not shown) is arranged to rotate the tube 131, which in turn rotates the shaft 121 of the auger 120 about the central longitudinal axis of the cyclone chamber 112.

The cyclone separator 116 further comprises a tubular outer wall 140 which is a tight but sliding fit around the tubular side wall 115. The lower end of the tubular side wall 115 is provided with an outwardly directed seal 126, which lightly seals against the internal surface of the tubular outer wall 140. The lower end of the tubular outer wall 140 is provided with a closure 117, which can be opened to allow separated dirt and dust to be emptied from a collection region at the bottom of the chamber 112.

A plunger comprising a tubular shaft 134 and a head 135 is arranged axially inside the array of high efficiency cyclones e.g. 126,127 over the outlet 130. The tubular shaft 134 is provided with internal axially-extending teeth which engage with a toothed wheel 137 of a motor 136. The motor 136 can be energised to move the plunger axially of the duct to bring the head 135 of the plunger into sealing contact with the outwardly tapered upper end of the tube 131. In this position the underside of the plunger pushes the tube 131 downwardly against the spring bias and against the flap 124, thereby causing the flap 124 to open as the plunger head 135 simultaneously closes the outwardly tapered upper end of the tube 131. Likewise, the flap 124 closes under the applied bias as the plunger head 135 is moved upwardly to open the outwardly tapered upper end of the tube 131.

In use air is drawn into the inlet 110 of the unit by a motor/fan unit (not shown) mounted downstream of the outlet of the unit. The inlet 110 is connected to a floor-engaging head of the vacuum cleaner, so that dust-laden air enters the cyclone chamber 112 via the inlet port 110. The motor is actuated in order to rotate the auger 120 in the counter-clockwise direction (i.e. opposite to the direction in which the vane 122 is wound).

The inlet 110 has a tangential orientation with respect to the wall 115 of the cyclone chamber 112 so that a cyclonic air flow is created inside the chamber 112. The air spirals downwardly around the chamber 112 towards its lower end. As the air flows downwards, the volume of air in the spiral flow is constantly being diminished by virtue of it having been drawn radially through the perforated shroud 119 towards the second separation stage 125.

As the air swirls inside the chamber 112, larger (denser) particles in the rotating airflow have too much inertia to follow the tight curve of the airflow and strike the outside wall 115 of the chamber 112, moving then to the bottom of the chamber 122 where they are deposited.

The partly cleaned air flowing through the perforated shroud 119 is drawn upwardly and subsequently passes around the periphery of the apparatus and enters the array of high efficiency cyclones e.g. 126,127 which are connected in parallel. The denser particles in the rotating airflow within the high efficiency cyclones e.g. 126,127 strike the frusto-conical wall of the cyclones and fall through the open lower ends of the cyclones 126,127 into the chamber 128.

Any dirt or dust separated by the high efficiency cyclones e.g. 126,127 falls onto the frusto-conical wall 129 of the filter chamber 128 and through the outlet 130 into the duct 133, where it is retained by the flap 124. The separated dirt and dust accumulates inside the duct 133. The motor 136 is periodically driven to open the flap 124 and to allow the dirt and dust which has accumulated to fall towards the bottom of the cyclone chamber 112. In this manner, dust separated by the high efficiency cyclones e.g. 126,127 is collected along with the dust separated by the cyclone separator 116. The dirt and dust can then be emptied by opening the closure 117. When the flap 124 is opened, the head 135 of the plunger closes the outlet 130 to prevent air from being drawn out of the cyclone chamber 112 and up the duct 133 directly to the outlet of the apparatus via a reverse flow through the cyclones 126,127. When the outlet 130 is closed, any dirt and dust separated by the high efficiency cyclones e.g. 126,127 falls onto the frusto-conical wall 129 and is retained inside the filter chamber 128 until the outlet 130 is opened, whereupon it falls into the duct 133 and is retained by the flap 124.

During use, the auger 120 is constantly driven to drive any dirt and dust collected within the bottom of cyclone chamber 112 downwardly. As the volume of the separated matter increases, the auger 120 acts to force it against the flap 117 at the bottom end of the cyclone chamber 112. The tubular outer wall 140 then moves downwardly as the force applied to the flap 117 increases. In this manner the volume available at the bottom of the cyclone chamber 112 for holding the separated matter increases. The reduced pressure inside the cyclone chamber 112 has a tendency to pull the flap 117 upwardly towards the auger 120, thereby maintaining the compactness of the unit and assisting compaction. The increasing diameter of the vane 122 of the auger 120 also enhances the compaction.

A vacuum cleaner in accordance with the present invention is simple in construction yet extremely effective in operation and exhibits a greatly increased capacity for holding collected dirt and dust compared with conventional cyclonic vacuum cleaners. Also, the cleaner can be operated continuously without having to stop it to discharge the dirt or dust separated by the high efficiency cyclones.

## Claims

1. A cyclone separation apparatus for separating matter from a flow of fluid, the apparatus comprising:
a first device (16) for separating dirt and dust from the fluid flow,
a second device (26) mounted downstream of the first device (16) for separating dirt and dust from the fluid flow from the first device (16),
a collection chamber (12) for collecting dirt and dust separated by the first and second separation devices (16, 26),
a passageway (40) extending from an outlet of the second device (26) to said collection chamber (12) for conveying dirt and dust separated by the second device (26) to said collection chamber (12), and
a first valve member (30) for closing the passageway (40) during use of the apparatus and arranged to retain dirt and dust separated by the second device (26), **characterised in that** an actuator is provided for opening the first valve member (30), and a second valve member (42) is arranged between the outlet (29) and the first valve member (30) for closing the passageway (40) when said first valve member (30) is opened by said actuator.

2. A cyclone separation apparatus as claimed in claim 1, **characterised in that** the actuator is arranged to close the second valve member (42) when the first valve member (30) is opened.

3. A cyclone separation apparatus as claimed in claim 2, **characterised in that** the passageway (40) has a distal end which communicates with said collection chamber (12) and a proximal end which communicates with the outlet (29) of said second separation device.

4. A cyclone separation apparatus as claimed in claim 3, **characterised in that** the first valve member (30) is disposed in the passageway (40) at a point remote from the proximal end thereof.

5. A cyclone separation apparatus as claimed in claim 4, **characterised in that** the second valve member (42) seals against the proximal end of the passageway (40) when closed.

6. A cyclone separation apparatus as claimed in any of claims 4 or 5, **characterised in that** the actuator comprises a portion (43) which extends along the passageway (40) to actuate the first valve member (30) and a portion (41) for actuating the second valve member (42).

7. A cyclone separation apparatus as claimed in any of claims 3 to 6, **characterised in that** the second valve member (42) comprises a formation on the actuator which closes the passageway (40).

8. A cyclone separation apparatus as claimed in any preceding claim, **characterised in that** the actuator comprises a device which is arranged to displace a portion of the actuator to operate the first and second valve members (30, 42).

9. A cyclone separation apparatus as claimed in any preceding claim, **characterised in that** the actuator comprises a portion (43) which extends along the passageway (40) from the proximal end thereof, the actuator device being disposed adjacent the second separator device.

10. A cyclone separation apparatus as claimed in any preceding claim, **characterised in that** the first valve member (30) is biased into its normally closed position.

11. A cyclone separation apparatus as claimed in any of claims 4 to 10 as appended to claim 3, **characterised in that** the first valve member (30) comprises a flap which is pivoted across the passageway (40) and which is pivoted towards the distal end of the passageway (40) to open the valve.

12. A cyclone separation apparatus as claimed in claim 11 as appended to claim 3, **characterised in that** an auger (13) is provided in the collection chamber (12) for compacting the dirt and dust separated by the first and second separation devices (16, 26).

13. A cyclone separation apparatus as claimed in any of claims 4 to 12 as appended to claim 3, **characterised in that** the passageway (40) extends along a shaft of the auger (13).

14. A cyclone separation apparatus as claimed in any preceding claim, **characterised in that** the actuator is arranged to periodically open the first valve member (30) and close the second valve member (42) during use of the apparatus.

15. A vacuum cleaner comprising a cyclone separation apparatus as claimed in any preceding claim.

## Patentansprüche

1. Zyklonabscheidevorrichtung zum Abscheiden von Materie aus einem Fluidstrom, wobei die Vorrichtung Folgendes umfasst:
eine erste Vorrichtung (16) zum Abscheiden von Schmutz und Staub aus dem Fluidstrom,
eine zweite Vorrichtung (26), die stromabwärts der ersten Vorrichtung (16) angebracht ist, um Schmutz und Staub aus dem Fluidstrom von der ersten Vorrichtung (16) zu trennen,
eine Sammelkammer (12) zum Sammeln von Schmutz und Staub, die von der ersten und der zweiten Trennvorrichtung (16, 26) getrennt werden,
einen Durchgang (40), der sich von einem Auslass der zweiten Vorrichtung (26) zur Sammelkammer (12) erstreckt, um von der zweiten Vorrichtung (26) getrennten Schmutz und Staub zur Sammelkammer (12) zu befördern, und
ein erstes Ventilelement (30) zum Verschließen des Durchgangs (40) während des Gebrauchs der Vorrichtung, das dafür ausgelegt ist, Schmutz und Staub zurückzuhalten, der durch die zweite Vorrichtung (26) getrennt wird, **dadurch gekennzeichnet, dass** ein Aktuator zum Öffnen des ersten Ventilelements (30) vorgesehen ist und ein zweites Ventilelement (42) zwischen dem Auslass (29) und dem ersten Ventilelement (30) angeordnet ist, um den Durchgang (40) zu schließen, wenn das erste Ventilelement (30) durch den Aktuator geöffnet wird.

2. Zyklonabscheidevorrichtung nach Anspruch 1, **dadurch gekennzeichnet, dass** der Aktuator das zweite Ventilelement (42) schließt, wenn das erste Ventilelement (30) geöffnet ist.

3. Zyklonabscheidevorrichtung nach Anspruch 2,
**dadurch gekennzeichnet, dass**
der Durchgang (40) Folgendes aufweist: ein distales Ende, das mit der Sammelkammer (12) kommuniziert, und ein proximales Ende, das mit dem Auslass (29) der zweiten Trennvorrichtung kommuniziert.

4. Zyklonabscheidevorrichtung nach Anspruch 3,
**dadurch gekennzeichnet, dass**
das erste Ventilelement (30) in dem Durchgang (40) an einem Punkt entfernt von dessen proximalem Ende angeordnet ist.

5. Zyklonabscheidevorrichtung nach Anspruch 4, **dadurch gekennzeichnet, dass** das zweite Ventilelement (42) im geschlossenen Zustand gegen das proximale Ende des Durchgangs (40) abdichtet.

6. Zyklonabscheidevorrichtung nach einem der Ansprüche 4 oder 5, **dadurch gekennzeichnet, dass** der Aktuator Folgendes umfasst: einen Abschnitt (43), der sich entlang des Durchgangs (40) erstreckt, um das erste Ventilelement (30) zu betätigen, und einen Abschnitt (41) zum Betätigen des zweiten Ventilelements (42).

7. Zyklonabscheidevorrichtung nach einem der Ansprüche 3 bis 6, **dadurch gekennzeichnet, dass** das zweite Ventilelement (42) eine Ausformung an dem Aktuator aufweist, die den Durchgang (40) verschließt.

8. Zyklonabscheidevorrichtung nach einem der vorhergehenden Ansprüche,
**dadurch gekennzeichnet, dass** der Aktuator eine Vorrichtung umfasst, die dafür ausgelegt ist, einen Abschnitt des Aktuators zu verschieben, um das erste und das zweite Ventilelement (30, 42) zu betätigen.

9. Zyklonabscheidevorrichtung nach einem der vorhergehenden Ansprüche,
**dadurch gekennzeichnet, dass** der Aktuator einen Abschnitt (43) umfasst, der sich entlang des Durchgangs (40) von seinem proximalen Ende aus erstreckt, wobei die Aktuatorvorrichtung neben der zweiten Trennvorrichtung angeordnet ist.

10. Zyklonabscheidevorrichtung nach einem der vorhergehenden Ansprüche,
**dadurch gekennzeichnet, dass** das erste Ventilelement (30) in seine normalerweise geschlossene Position vorgespannt ist.

11. Zyklonabscheidevorrichtung nach einem der Ansprüche 4 bis 10, wie an Anspruch 3 angehängt, **dadurch gekennzeichnet, dass** das erste Ventilelement (30) eine Klappe aufweist, die in dem Durchgang (40) schwenkt und die zum distalen Ende des Durchgangs (40) zum Öffnen des Ventils geschwenkt wird.

12. Zyklonabscheidevorrichtung nach Anspruch 11, wie an Anspruch 3 angehängt,
**dadurch gekennzeichnet, dass** in der Sammelkammer (12) eine Schnecke (13) zum Verdichten des durch die erste und die zweite Trennvorrichtung (16, 26) getrennten Schmutzes und Staubes vorgesehen ist.

13. Zyklonabscheidevorrichtung nach einem der Ansprüche 4 bis 12, wie an Anspruch 3 angehängt, **dadurch gekennzeichnet, dass** der Durchgang (40) sich entlang einer Welle der Schnecke (13) erstreckt.

14. Zyklonabscheidevorrichtung nach einem der vorhergehenden Ansprüche,
**dadurch gekennzeichnet, dass** das Aktuator das erste Ventilelement (30) periodisch öffnet und das zweite Ventilelement (42) während der Verwendung der Vorrichtung schließt.

15. Staubsauger, der eine Zyklonabscheidevorrichtung nach einem der vorhergehenden Ansprüche umfasst.

## Revendications

1. Un appareil de séparation à cyclone pour la séparation de matières d'un flux de fluide, le dispositif comprenant :
un premier dispositif (16) de séparation de la poussière et des saletés du flux de fluide,
un second dispositif (26) monté en aval du premier dispositif (16) de séparation de la poussière et des saletés du flux de fluide provenant du premier dispositif (16),
une chambre collectrice (12) de collecte de la poussière et de la saleté séparées par le premier et le second dispositif de séparation (16, 26),
un passage (40) s'étendant d'une sortie du second dispositif (26) à ladite chambre collectrice (12) pour transporter la poussière et la saleté séparées par le second dispositif (26) jusqu'à ladite chambre collectrice (12), et
un premier élément de soupape (30) de fermeture du passage (40) durant l'utilisation de l'appareil et agencé de façon à retenir la poussière et la saleté séparées par le second dispositif (26), **caractérisé en ce qu'** un actionneur est fourni pour ouvrir le premier élément de soupape (30), et un second élément de soupape (42) agencé entre la sortie (29) et le premier élément de soupape (30) pour fermer le passage (40) lorsque ledit premier élément de soupape (30) est ouvert par ledit actionneur.

2. Un appareil de séparation à cyclone selon la revendication 1, **caractérisé en ce que** l'actionneur est agencé de façon à fermer le second élément de soupape (42) lorsque le premier élément de soupape (30) est ouvert.

3. Un appareil de séparation à cyclone selon la revendication 2,
**caractérisé en ce que**
le passage (40) dispose d'une extrémité distale communiquant avec ladite chambre collectrice (12) et d'une extrémité proximale communiquant avec la sortie (29) dudit second dispositif de séparation.

4. Un appareil de séparation à cyclone selon la revendication 3,
**caractérisé en ce que**
le premier élément de soupape (30) est placé dans le passage (40) en un point distant de l'extrémité proximale de ce dernier.

5. Un appareil de séparation à cyclone selon la revendication 4, **caractérisé en ce que** le second élément de soupape (42) assure un joint étanche contre l'extrémité proximale du passage (40) lorsqu'il est fermé.

6. Un appareil de séparation à cyclone selon la revendication 4 ou 5, **caractérisé en ce que** l'actionneur comprend une partie (43) s'étendant le long du passage (40) pour actionner le premier élément de soupape (30) et une partie (41) servant à actionner le second élément de soupape (42).

7. Un appareil de séparation à cyclone selon l'une des revendications 3 à 6,
**caractérisé en ce que** le second élément de soupape (42) comprend une structure sur l'actionneur servant à fermer le passage (40).

8. Un appareil de séparation à cyclone selon l'une des revendications précédentes,
**caractérisé en ce que** l'actionneur comprend un dispositif agencé de façon à déplacer une partie de l'actionneur pour actionner le premier et le second élément de soupape (30, 42).

9. Un appareil de séparation à cyclone selon l'une des revendications précédentes,
**caractérisé en ce que** l'actionneur comprend une partie (43) s'étendant le long du passage (40) à partir de l'extrémité proximale de ce dernier, l'actionneur étant disposé de façon adjacente au second dispositif de séparation.

10. Un appareil de séparation à cyclone selon l'une des revendications précédentes,
**caractérisé en ce que** le premier élément de soupape (30) est orienté dans sa position normalement fermée.

11. Un appareil de séparation à cyclone selon l'une des revendications 4 à 10 en tant qu'annexes à la revendication 3, **caractérisé en ce que** le premier élément de soupape (30) comprend un clapet pivoté sur le passage (40) et pivotant vers l'extrémité distale du passage (40) pour ouvrir la soupape.

12. Un appareil de séparation à cyclone selon la revendication 11 en tant qu'annexe à la revendication 3, **caractérisé en ce qu'**une tarière (13) est fournie dans la chambre collectrice (12) pour compacter la poussière et la saleté séparées par le premier et le second dispositif de séparation (16, 26).

13. Un appareil de séparation à cyclone selon l'une des revendications 4 à 12 en tant qu'annexes à la revendication 3, **caractérisé en ce que** le passage (40) s'étend le long d'un axe de la tarière (13).

14. Un appareil de séparation à cyclone selon l'une des revendications précédentes,
**caractérisé en ce que** l'actionneur est agencé de façon à ouvrir le premier élément de soupape (30) et fermer le second élément de soupape (42) de façon périodique durant l'utilisation de l'appareil.

15. Un aspirateur comprenant un appareil de séparation à cyclone selon l'une des revendications précédentes.
